(19) Europäisches Patentamt
European Patent Office
Office européen des brevets

(11) Veröffentlichungsnummer: **0 480 252 B1**

# (12) EUROPÄISCHE PATENTSCHRIFT

(45) Veröffentlichungstag der Patentschrift: **26.07.95**

(51) Int. Cl.[6]: **C09B 53/00**, B41M 5/26, C07D 213/90, C07D 401/12, C07D 417/12, C07D 413/12

(21) Anmeldenummer: **91116395.4**

(22) Anmeldetag: **26.09.91**

## (54) Pyridonfarbstoffe und ein Verfahren zu ihrer thermischen Übertragung.

(30) Priorität: **06.10.90 DE 4031722**

(43) Veröffentlichungstag der Anmeldung:
**15.04.92 Patentblatt 92/16**

(45) Bekanntmachung des Hinweises auf die Patenterteilung:
**26.07.95 Patentblatt 95/30**

(84) Benannte Vertragsstaaten:
**CH DE FR GB IT LI**

(56) Entgegenhaltungen:
**DE-A- 2 117 363**
**GB-A- 1 591 642**
**GB-A- 2 209 036**

**CHEMICAL ABSTRACTS, Band 78, 1973, Columbus, Ohio, USA ZAITSEV et al."Structure of 2-methoxy-3-hydroxy-6-phenyl- azopyridine" Seite 397,Zusammenfassung- Nr. 123 507p**

(73) Patentinhaber: **BASF Aktiengesellschaft**
**Carl-Bosch-Strasse 38**
**D-67063 Ludwigshafen (DE)**

(72) Erfinder: **Bach, Volker, Dr.**
**Robert-Schuman-Strasse 8**
**W-6730 Neustadt (DE)**
Erfinder: **Sens, Ruediger, Dr.**
**Medicusstrasse 12**
**W-6800 Mannheim 1 (DE)**
Erfinder: **Etzbach, Karl-Heinz, Dr.**
**Carl-Bosch-Ring 55**
**W-6710 Frankenthal (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Pyridonfarbstoffe der Formel I

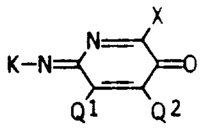

(I),

in der

Q[1] Wasserstoff, Fluor, Chlor, Methyl oder einen Rest der Formel -NH-CO-$R^1$, -NH-CO-O$R^1$, -NH-CO-N$R^1R^2$, NH-CS-O$R^1$, -NH-CS-N$R^1R^2$, -NH-CO-$R^3$, -NH-$SO_2$-$R^1$, -NH-$SO_2$-$R^3$ oder -NH-$SO_2$-N$R^1R^2$, worin

$R^1$ und $R^2$ gleich oder verschieden sind und unabhängig voneinander jeweils für $C_1$-$C_8$-Alkyl, das gegebenenfalls substituiert ist und durch ein oder zwei Sauerstoffatome in Etherfunktion unterbrochen sein kann, $C_5$-$C_7$-Cycloalkyl, Phenyl oder Tolyl oder -N$R^1R^2$ auch für Amino und

$R^3$ für einen fünf- oder sechsgliedrigen aromatischen heterocyclischen Rest, der gegebenenfalls benzoanelliert ist und ein oder mehrere Heteroatome, ausgewählt aus der Gruppe, bestehend aus Stickstoff, Sauerstoff und Schwefel, ausweist, stehen,

Q[2] Wasserstoff, Fluor oder Chlor oder $Q^1$ und $Q^2$ zusammen mit den Kohlenstoffatomen an die sie geknüpft sind, einen fünf- oder sechsgliedrigen aromatischen carbocyclischen oder heterocyclischen Ring,

X den obengenannten Rest $R^3$ oder einen Rest der Formel -CO-O$R^1$, -CO-NH$R^1$, -CO-NH-CO-$R^1$, -CO-NH-CO-$R^3$, -CO-NH-$SO_2$-$R^3$, -NH-CO-$R^1$, -NH-CO-O$R^1$, -NH-CO-N$R^1R^2$, -NH-CS-O$R^1$, -NH-CS-N$R^1R^2$, -NH-CO-$R^3$, -NH-$SO_2$-$R^1$, -NH-$SO_2$-$R^3$ oder -NH-$SO_2$-N$R^1R^2$, worin $R^1$, $R^2$ und $R^3$ jeweils die obengenannte Bedeutung besitzen, und

K einen aromatischen carbocyclischen oder heterocyclischen Rest bedeuten,

sowie ein Verfahren zu ihrer thermischen Übertragung.

Aus der DE-A-3 524 519 sind Indoanilinfarbstoffe bekannt, die anstelle des obengenannten Pyridonrings einen Benzolring aufweisen. Weiterhin beschreibt die EP-A-366 963 Naphthochinonfarbstoffe, die anstelle des obengenannten Pyridonrings einen Naphthalinring aufweisen, an den, über eine Carbonylaminogruppe verknüpft, ein heterocyclischer Rest gebunden ist.

Es hat sich jedoch gezeigt, daß die Farbstoffe des Standes der Technik noch Mängel in ihren anwendungstechnischen Eigenschaften aufweisen.

Aufgabe der vorliegenden Erfindung war es daher, neue Pyridonfarbstoffe bereitzustellen, die sich in vorteilhafter Weise zur thermischen Übertragung eignen.

Demgemäß wurden die eingangs näher bezeichneten Pyridonfarbstoffe der Formel I gefunden.

Aromatische carbocyclische oder heterocyclische Reste K leiten sich beispielsweise aus der Anilin-, Aminonaphthalin-, Indol-, Chinolin-, Benzoxazin- oder Aminothiazolreihe ab.

Bevorzugt sind Pyridonfarbstoffe der Formel I, in der

K einen Rest der Formel

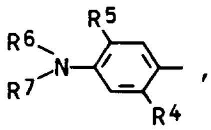 ,
(IIa)

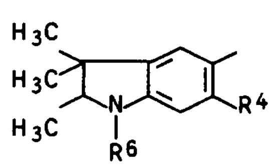 ,
(IIb)

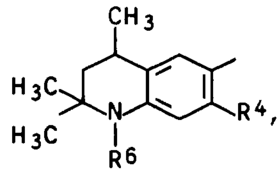
(IIc)

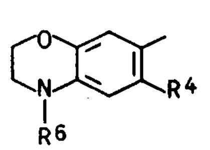 ,
(IId)

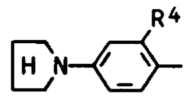 ,
(IIe)

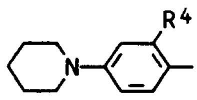 ,
(IIf)

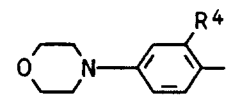
(IIg)

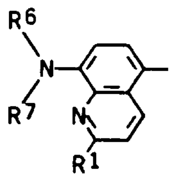 ,
(IIh)

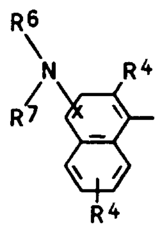 ,
(IIi)

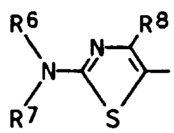 ,
(IIj)

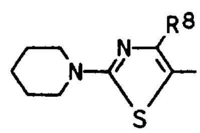
(IIk)

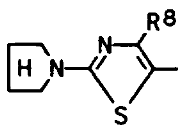
(IIl)

oder

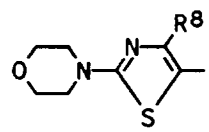
(IIm)

bedeutet, worin

$R^4$ für Wasserstoff, Methyl, Methoxy, $C_1$-$C_4$-Alkylsulfonylamino, $C_1$-$C_4$-Mono- oder Dialkylaminosulfonylamino oder den Rest -$NHCOR^9$ oder -$NHCO_2R^9$, wobei $R^9$ die Bedeutung von Phenyl, Benzyl, Tolyl oder $C_1$-$C_8$-Alkyl, das gegebenenfalls durch ein oder zwei Sauerstoffatome in Etherfunktion unterbrochen ist, besitzt,

$R^5$ für Wasserstoff, Methoxy oder Ethoxy,

$R^6$ und $R^7$ gleich oder verschieden sind und unabhängig voneinander jeweils für Wasserstoff, $C_1$-$C_8$-Alkyl, das gegebenenfalls substituiert ist und durch ein oder zwei Sauerstoffatome in Etherfunktion unterbrochen sein kann, oder $C_5$-$C_7$-Cycloalkyl und

$R^8$ für Wasserstoff, Halogen, $C_1$-$C_6$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Thienyl, Hydroxy oder $C_1$-$C_8$-Monoalkylamino stehen und

$R^1$ die obengenannte Bedeutung besitzt.

Alle in der Formel der erfindungsgemäßen Pyridonfarbstoffe auftretenden Alkylgruppen können sowohl geradkettig als auch verzweigt sein.

Wenn in der Formel der erfindungsgemäßen Pyridonfarbstoffe substituierte Alkylgruppen auftreten, so können als Substituenten z.B. Cyano, Phenyl, Tolyl, $C_1$-$C_6$-Alkanoyloxy, $C_1$-$C_4$-Alkoxycarbonyl oder $C_1$-$C_4$-Alkoxycarbonyloxy, wobei im letzten Fall die Alkoxygruppe durch Phenyl oder $C_1$-$C_4$-Alkoxy substituiert sein kann, in Betracht kommen.

Geeignete Reste $R^1$, $R^2$, $R^6$, $R^7$, $R^8$ und $R^9$ sind z.B. Methyl, Ethyl, Propyl, Isopropyl, Butyl, Isobutyl, sec-Butyl, Pentyl, Isopentyl, Neopentyl, tert-Pentyl, Hexyl oder 2-Methylpentyl.

Reste $R^1$, $R^2$, $R^6$, $R^7$ und $R^9$ sind weiterhin z.B. Heptyl, Octyl, 2-Ethylhexyl, 2-Methoxyethyl, 2- oder 3-Methoxypropyl, 2-Ethoxyethyl, 2- oder 3-Ethoxypropyl, 2-Propoxyethyl, 2- oder 3-Propoxypropyl, 2-Butoxyethyl, 2- oder 3-Butoxypropyl, 3,6-Dioxaheptyl oder 3,6-Dioxaoctyl.

Reste $R^1$, $R^2$, $R^6$ und $R^7$ sind weiterhin z.B. 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Metttoxycarbonylethyl, 2- oder 3-Methoxycarbonylpropyl, 2-Ethoxycarbonylethyl, 2- oder 3-Ethoxycarbonylpropyl 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Propoxycarbonyloxyethyl, 2- oder 3-Propoxycarbonyloxypropyl, 2-Butoxycarbonyloxyethyl, 2- oder 3-Butoxycarbonyloxypropyl, 2-(2-Phenylethoxycarbonyloxy)ethyl, 2- oder 3-(2-Phenylethoxycarbonyloxy)-propyl, 2-(2-Ethoxyethoxycarbonyloxy)ethyl, 2- oder 3-(2-Ethoxyethoxycarbonyloxy)propyl, Benzyl, 2-Methylbenzyl, 1- oder 2-Phenylethyl, Cyclopentyl, Cyclohexyl oder Cycloheptyl.

Reste $R^4$ sind z.B. Methylsulfonylamino, Ethylsulfonylamino, Propylsulfonylamino, Isopropylsulfonylamino, Butylsulfonylamino, Mono- oder Dimethylaminosulfonylamino, Mono- oder Diethylaminosulfonylamino, Mono- oder Dipropylaminosulfonylamino, Mono- oder Diisopropylaminosulfonylamino, Mono- oder Dibutylaminosulfonylamino oder (N-Methyl-N-ethylaminosulfonyl)amino.

Reste $R^8$ sind weiterhin z.B. Phenyl, 2-Methylphenyl, 2,4-Dimethylphenyl, 2-Methoxyphenyl, 2,4-Dimethoxyphenyl, Benzyl, 2-Methylbenzyl, 2,4-Dimethylbenzyl, 2-Methoxybenzyl, 2,4-Dimethoxybenzyl, Methylamino, Ethylamino, Propylamino, Isopropylamino, Butylamino, Pentylamino, Hexylamino, Heptylamino, Octylamino oder 2-Ethylhexylamino.

Reste $R^3$ leiten sich von einem fünf- oder sechsgliedrigen aromatischen heterocyclischen Rest ab, der gegebenenfalls benzoanelliert ist und der ein oder mehrere Heteroatome, ausgewählt aus der Gruppe, bestehend aus Stickstoff, Sauerstoff und Schwefel, aufweist.

Geeignete heterocyclische Grundkörper, die Substituenten tragen können, von denen sich die Reste $R^3$ ableiten, sind z.B. Pyrrol, Furan, Thiophen, Pyrazol, Imidazol, Oxazol, Isoxazol, Thiazol, Isothiazol, 1,2,4-Triazol, 1,2,4-Oxdiazol, 1,3,4-Oxdiazol, 1,2,4-Thiadiazol, 1,3,4-Thiadiazol, Pyridin, Pyridazin, Pyrimidin oder Pyrazin.

Hervorzuheben sind dabei Heterocyclen aus der Pyrrol-, Thiophen-, Isoxazol-, Pyridin- oder Pyridazinreihe.

Als Reste $R^3$-CO oder $R^3$-$SO_2$ kommen insbesondere solche fünf- oder sechsgliedrigen aromatischen heterocyclischen Reste in Betracht, die sich von den folgenden heterocyclischen Carbonsäuren $R^3$-COOH oder Sulfonsäuren $R^3$-$SO_3H$ ableiten:

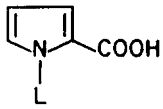 ,

(IIIa)

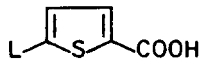 ,

(IIIb)

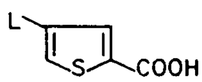 ,

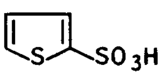 ,

(IIId)

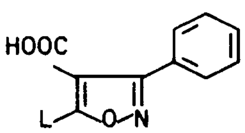 ,

(IIIe)

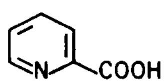 ,

(IIIf)

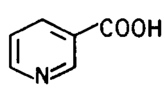 ,

(IIIg)

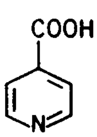 ,

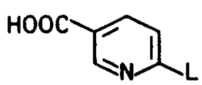 oder 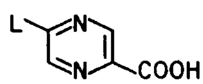 ,

wobei

L jeweils für $C_1$-$C_4$-Alkyl steht.

Bevorzugt sind Pyridonfarbstoffe der Formel I, in der

$Q^1$ Wasserstoff, Chlor oder Methyl und

$Q^2$ Wasserstoff oder Chlor

bedeuten.

Besonders bevorzugt sind Pyridonfarbstoffe der Formel I, in der K einen Rest der Formel IIa, IIc, IIe, IIf, IIg, IIj, IIk, IIl oder IIm, bedeutet, wobei ein Rest der Formel IIa oder IIc besonders hervorzuheben ist.

Insbesondere zu nennen sind Pyridonfarbstoffe der Formel Ia

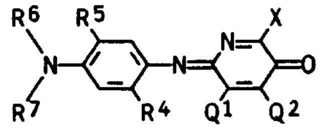

(Ia),

in der

- $Q^1$ Wasserstoff, Chlor oder Methyl,
- $Q^2$ Wasserstoff oder Chlor,
- X einen Rest der Formel -CO-NH-$R^1$, -NH-CO-$R^1$, -NH-CO-O$R^1$ oder -NH-CO-N$R^1R^2$, worin $R^1$ und $R^2$ unabhängig voneinander für $C_1$-$C_8$-Alkyl, 2-Cyanoethyl, Benzyl, $C_1$-$C_4$-Alkanoyloxy-$C_1$-$C_4$-alkyl, $C_1$-$C_4$-Alkoxycarbonyl-$C_1$-$C_4$-alkyl, $C_1$-$C_4$-Alkoxycarbonyloxy-$C_1$-$C_4$-alkyl, $C_5$-$C_7$-Cycloalkyl, Phenyl oder Tolyl oder -N$R^1R^2$ auch für Amino stehen,
- $R^4$ Wasserstoff, Methyl, Methoxy oder den Rest -NHCO$R^9$ oder -NH$CO_2R^9$, worin $R^9$ für Phenyl, Benzyl, Tolyl oder $C_1$-$C_8$-Alkyl, das gegebenenfalls durch ein Sauerstoffatom in Etherfunktion unterbrochen ist, steht,
- $R^5$ Wasserstoff und
- $R^6$ und $R^7$ unabhängig voneinander Wasserstoff, $C_1$-$C_8$-Alkyl, 2-Cyanoethyl, Benzyl, $C_1$-$C_4$-Alkanoyloxy-$C_1$-$C_4$-alkyl, $C_1$-$C_4$-Alkoxycarbonyl-$C_1$-$C_4$-alkyl oder $C_1$-$C_4$-Alkoxycarbonyloxy-$C_1$-$C_4$-alkyl bedeuten.

Insbesondere zu nennen sind weiterhin Pyridonfarbstoffe der Formel Ib

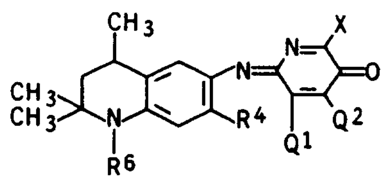

(Ib),

in der

- $Q^1$ Wasserstoff, Chlor oder Methyl,
- $Q^2$ Wasserstoff oder Chlor,
- X einen Rest der Formel -CO-NH-$R^1$, -NH-CO-$R^1$, -NH-CO-O$R^1$ oder -NH-CO-N$R^1R^2$, worin $R^1$ und $R^2$ unabhängig voneinander für $C_1$-$C_8$-Alkyl, 2-Cyanoethyl, Benzyl, $C_1$-$C_4$-Alkanoyloxy-$C_1$-$C_4$-alkyl, $C_1$-$C_4$-Alkoxycarbonyl-$C_1$-$C_4$-alkyl, $C_1$-$C_4$-Alkoxycarbonyloxy-$C_1$-$C_4$-alkyl, $C_5$-$C_7$-Cycloalkyl, Phenyl oder Tolyl oder -N$R^1R^2$ auch für Amino stehen,
- $R^4$ Wasserstoff, Methyl, Methoxy oder den Rest -NHCO$R^9$ oder -NH$CO_2R^9$, worin $R^9$ für Phenyl, Benzyl, Tolyl oder $C_1$-$C_8$-Alkyl, das gegebenenfalls durch ein Sauerstoffatom in Etherfunktion unterbrochen ist, steht und
- $R^6$ Wasserstoff, $C_1$-$C_8$-Alkyl, 2-Cyanoethyl, Benzyl, $C_1$-$C_4$-Alkanoyloxy-$C_1$-$C_4$-alkyl, $C_1$-$C_4$-Alkoxycarbonyl-$C_1$-$C_4$-alkyl oder $C_1$-$C_4$-Alkoxycarbonyloxy-$C_1$-$C_4$-alkyl bedeuten.

Ganz besonders hervorzuheben sind Pyridonfarbstoffe der Formel Ia oder Ib, in der X den Rest -NH-CO$R^1$, worin $R^1$ für $C_1$-$C_8$-Alkyl, das gegebenenfalls durch ein Sauerstoffatom in Etherfunktion unterbrochen ist, steht, und $R^4$ den Rest -NH-CO$R^9$ oder -NH$CO_2R^9$, worin $R^9$ für Phenyl, Benzyl, Tolyl oder $C_1$-$C_8$-Alkyl, das gegebenenfalls durch ein Sauerstoffatom in Etherfunktion unterbrochen ist, steht, bedeuten.

Die erfindungsgemäßen Pyridonfarbstoffe der Formel I können nach an sich bekannten Methoden hergestellt werden.

Beispielsweise kann man eine Nitrosoverbindung der Formel IV

K-N=O (IV),

in der K die obengenannte Bedeutung besitzt, mit einem Pyridon der Formel V

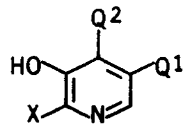

(V),

in der $Q^1$, $Q^2$ und X jeweils die obengenannte Bedeutung besitzen, kondensieren (siehe z.B. DE-A-3 716 656).

Es ist auch möglich, Amine der Formel VI

$K - NH_2$ (VI),

in der K jeweils die obengenannte Bedeutung besitzt, mit den Pyridinen der Formel V oxidativ zu kuppeln (siehe z.B. US-A-4 695 287).

Eine weitere Aufgabe der vorliegenden Erfindung war es, ein neues Verfahren für den thermischen Transfer von Farbstoffen bereitzustellen.

Beim Thermotransferdruckverfahren wird ein Transferblatt, das einen thermisch transferierbaren Farbstoff in einem oder mehreren Bindemitteln, gegebenenfalls zusammen mit geeigneten Hilfsmitteln, auf einem Träger enthält, mit einer Energiequelle, z.B. mit einem Heizkopf oder einem Laser, durch kurze Heizimpulse (Dauer: Bruchteile einer Sekunde) von der Rückseite her erhitzt, wodurch der Farbstoff aus dem Transferblatt migriert und in die Oberflächenbeschichtung eines Aufnahmemediums hineindiffundiert. Der wesentliche Vorteil dieses Verfahrens besteht darin, daß die Steuerung der zu übertragenden Farbstoffmenge (und damit die Farbabstufung) durch Einstellung der von der Energiequelle abzugebenden Energie leicht möglich ist.

Allgemein wird die Farbaufzeichnung unter Verwendung der drei subtraktiven Grundfarben Gelb, Magenta, Cyan (und gegebenenfalls Schwarz) durchgeführt.

Um eine optimale Farbaufzeichnung zu ermöglichen, müssen die Farbstoffe folgende Eigenschaften besitzen:

- leichte thermische Transferierbarkeit,
- geringe Migration innerhalb oder aus der Oberflächenbeschichtung des Aufnahmemediums bei Raumtemperatur,
- hohe thermische und photochemische Stabilität sowie Resistenz gegen Feuchtigkeit und chemische Stoffe,
- für subtraktive Farbmischung die geeigneten Farbtöne aufweisen,
- einen hohen molaren Absorptionskoeffizienten aufweisen,
- bei Lagerung des Transferblattes nicht auskristallisieren.

Diese Forderungen sind erfahrungsgemäß gleichzeitig sehr schwierig zu erfüllen.

Daher entsprechen die meisten der bekannten, für den thermischen Transferdruck verwendeten Farbstoffe nicht dem geforderten Anforderungsprofil.

Es wurde nun gefunden, daß die Übertragung von Pyridonfarbstoffen von einem Träger auf ein mit Kunststoff beschichtetes Papier durch Diffusion oder Sublimation mit Hilfe einer Energiequelle vorteilhaft gelingt, wenn man einen Träger verwendet, auf dem sich ein oder mehrere Farbstoffe der obengenannten Formel I befinden.

Im Vergleich zu den bei den bekannten Verfahren verwendeten Farbstoffen zeichnen sich die im erfindungsgemäßen Verfahren übertragenen Farbstoffe der Formel I im allgemeinen durch verbesserte Migrationseigenschaften im Aufnahmemedium bei Raumtemperatur, leichtere thermische Transferierbarkeit, höhere thermische und photochemische Stabilität, leichtere technische Zugänglichkeit, bessere Resistenz gegen Feuchtigkeit und chemische Stoffe, höhere Farbstärke, bessere Löslichkeit oder bessere Eignung für die subtraktive Farbmischung (höhere Farbtonreinheit, günstigere Form der Absorptionsbande) aus. Außerdem eignen sie sich besonders vorteilhaft für Farbstoffmischungen mit Triazolopyridinfarbstoffen, wie sie in der älteren Patentanmeldung EP-A-416 434 beschrieben sind. Dies gilt hauptsächlich im Hinblick auf bessere Transferierbarkeit, höhere Farbbandstabilität (bessere Löslichkeit im Bindemittel), höhere Lichtechtheit, bessere Verteilung der Transferfarbstoffe im Aufnahmemedium und insbesondere für die Herstellung von besseren Schwarzmischungen.

Zur Herstellung der für das erfindungsgemäße Verfahren benötigten Farbstoffträger werden die Farbstoffe in einem geeigneten organischen Lösungsmittel oder in Mischungen von Lösungsmitteln mit einem oder mehreren Bindemitteln, gegebenenfalls unter Zugabe von Hilfsmitteln, zu einer Druckfarbe verarbeitet. Diese enthält den Farbstoff vorzugsweise in molekulardispers gelöster Form. Die Druckfarbe kann mittels

einer Rakel auf den inerten Träger aufgetragen und die Färbung an der Luft getrocknet werden.

Geeignete organische Lösungsmittel für die Farbstoffe I sind z.B. solche, in denen die Löslichkeit der Farbstoffe I bei einer Temperatur von 20 °C größer als 1 Gew.-%, vorzugsweise größer als 5 Gew.-% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, die in organischen Lösungsmitteln löslich sind und den Farbstoff an den inerten Träger abriebfest zu binden vermögen. Dabei werden solche Bindemittel bevorzugt, die den Farbstoff nach Trocknung der Druckfarbe an der Luft in Form eines klaren, transparenten Films aufnehmen, ohne daß dabei eine sichtbare Auskristallisation des Farbstoffes auftritt.

Beispiele für solche Bindemittel sind Cellulosederivate, z.B. Methylcellulose, Ethylcellulose, Ethylhydroxyethylcellulose, Hydroxypropylcellulose, Celluloseacetat oder Celluloseacetobutyrat, Stärke, Alginate, Alkydresins, Vinylresins, Polyvinylalkohol, Polyvinylacetat, Polyvinylbutyrat oder Polyvinylpyrrolidon. Weiterhin kommen Polymere und Copolymere von Acrylaten oder deren Derivate, wie Polyacrylsäure, Polymethylmethacrylat oder Styrolacrylatcopolymere, Polyesterresins, Polyamidresins, Polyurethanresins oder natürliche CH-Resins, wie Gummi Arabicum, als Bindemittel in Betracht. Weitere geeignete Bindemittel sind z.B. in der DE-A-3 524 519 beschrieben.

Bevorzugte Bindemittel sind Ethylcellulose, Ethylhydroxyethylcellulose, Polyvinylbutyrat oder Polyvinylacetat.

Das Gewichtsverhältnis Bindemittel:Farbstoff beträgt im allgemeinen 1:1 bis 10:1.

Als Hilfsmittel kommen z.B. Trennmittel in Betracht, wie sie in der EP-A-227 092, EP-A-192 435 oder den dort zitierten Patentanmeldungen genannt sind. Darüber hinaus sind besonders organische Additive zu nennen, welche das Auskristallisieren der Transferfarbstoffe bei Lagerung oder beim Erhitzen des Farbbandes verhindern, z.B. Cholesterin oder Vanillin.

Inerte Träger sind z.B. Seiden-, Lösch- oder Pergaminpapier oder Kunststoffolien mit guter Wärmebeständigkeit, z.B. gegebenenfalls metallbeschichteter Polyester, Polyamid oder Polyimid. Der inerte Träger wird auf der dem Thermokopf zugewandten Seite gegebenenfalls zusätzlich mit einer Gleitmittelschicht (Slipping layer) beschichtet, um ein Verkleben der Energiequelle, insbesondere des Thermokopfes, mit dem Trägermaterial zu verhindern. Geeignete Gleitmittel werden z.B. in der EP-A-216 483 oder EP-A-227 095 beschrieben. Die Dicke des Farbstoff-Trägers beträgt im allgemeinen 3 bis 30 µm, vorzugsweise 5 bis 10 µm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Geeignete Rezepturen für die Nehmerschichtzusammensetzung werden z.B. in der EP-A-227 094, EP-A-133 012, EP-A-133 011, EP-A-111 004, JP-A-199 997/1986, JP-A-283 595/1986; JP-A-237 694/1986 oder JP-A-127 392/1986 ausführlich beschrieben.

Die Übertragung erfolgt mittels einer Energiequelle, z.B. mittels eines Lasers oder mittels eines Thermokopfes, wobei letzterer auf eine Temperatur von ≧ 300 °C aufheizbar sein muß, damit der Farbstofftransfer im Zeitbereich t: 0 < t < 15 msec erfolgen kann. Dabei migriert der Farbstoff aus dem Transferblatt und diffundiert in die Oberflächenbeschichtung des Aufnahmemediums.

Die erfindungsgemäßen Farbstoffe eignen sich weiterhin vorteilhaft zum Färben von synthetischen Materialien, z.B. von Polyestern, Polyamiden oder Polycarbonaten. Insbesondere zu nennen sind textile Gewebe aus Polyester oder Polyamid oder Polyester-Baumwolle-Mischgewebe.

Die neuen Farbstoffe eignen sich weiterhin vorteilhaft für die Herstellung von Farbfiltern, wie sie z.B. in der EP-A-399 473 beschrieben sind. Schließlich können sie auch vorteilhaft für die Herstellung von Tonern für die Elektrophotographie verwendet werden.

Die folgenden Beispiele sollen die Erfindung näher erläutern. Angaben über Prozente beziehen sich, sofern nicht anders vermerkt, auf das Gewicht.

Herstellung der Farbstoffe

Beispiel 1

11 g 3-Diethylaminoacetanilid (96 %ig) wurden in 100 ml Wasser und 50 ml konz. Salzsäure gelöst. Bei 0 bis 5 °C wurden anschließend 18 ml 23 %ige Natriumnitritlösung zugetropft. Zur Vervollständigung der Nitrosierung wurde 2 Stunden bei 0 bis 5 °C nachgerührt. Danach wurde mit 25 %iger Ammoniumhydroxidlösung ein pH-Wert von 7 bis 8 eingestellt und die freie Nitrosoverbindung mit 20 ml Methylenchlorid ausgeschüttelt. Die organische Phase wurde zu einer Lösung von 6,05 g 2-Amino-3-hydroxypyridin in 50 ml

Acetanhydrid gegeben und die Reaktionslösung bei Raumtemperatur über Nacht gerührt. Nach Zugabe von 100 ml Wasser wurde die ölige Farbstoffphase abgetrennt und über Kieselgel mit Essigester säulenchromatographiert. Nach Einengung des Eluats fiel der Farbstoff aus, wurde abgesaugt, mit Methanol gewaschen und getrocknet.

Ausbeute: 0,18 g Spektral reiner Farbstoff der Formel

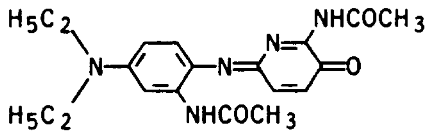

mit einem Festpunkt von 188 °C und einem Absorptionsmaximum (gemessen in Tetrahydrofuran) von 641 nm.

In ähnlicher Weise wurden die Farbstoffe der folgenden Tabellen 1 und 2 erhalten. Die Tabellen enthalten neben dem Absorptionsmaximum (gemessen in Tetrahydrofuran) auch den $R_f$-Wert auf Silicagel und das bei der Chromatographie verwendete Laufmittel Toluol (T)/Essigester (E) im angegebenen Volumenverhältnis.

Tabelle 1

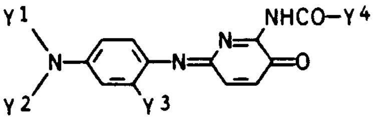

| Bsp. Nr. | $Y^1$ | $Y^2$ | $Y^3$ | $Y^4$ | $\lambda_{max}$ (nm) | $R_f$-Wert | T:E |
|---|---|---|---|---|---|---|---|
| 2 | $C_2H_5$ | $C_2H_5$ | $NHCO_2C_2H_4OC_2H_5$ | $CH_3$ | 637 | 0,38 | 0:1 |
| 3 | $C_2H_5$ | $C_4H_9$ | $CH_3$ | $CH_3$ | 626 | 0,40 | 3:2 |
| 4 | $C_2H_4CN$ | $C_2H_5$ | H | $CH_3$ | 590 | 0,45 | 0:1 |
| 5 | Benzyl | $C_2H_5$ | H | $CH_3$ | 601 | 0,28 | 3:2 |
| 6 | Benzyl | $C_2H_5$ | $CH_3$ | $CH_3$ | 617 | 0,42 | 3:2 |
| 7 | $C_2H_4OCOCH_3$ | $C_2H_5$ | H | $CH_3$ | 600 | 0,45 | 0:1 |
| 8 | $C_2H_4OCOCH_3$ | $C_2H_5$ | $NHCOCH_2OCH_3$ | $CH_3$ | 630 | 0,30 | 0:1 |
| 9 | $C_2H_4OCOCH_3$ | $C_4H_9$ | $NHCOCH_3$ | $CH_3$ | 633 | 0,34 | 0:1 |
| 10 | $C_2H_4OC_2H_5$ | $C_2H_4OC_2H_5$ | $NHCOCH_3$ | $CH_3$ | 636 | 0,36 | 0:1 |
| 11 | $C_2H_5$ | $C_2H_4OCH_3$ | $CH_3$ | $CH_3$ | 621 | 0,39 | 0:1 |
| 12 | $C_4H_9$ | $C_4H_9$ | $NHCOCH_3$ | $CH_3$ | 644 | 0,46 | 0:1 |
| 13 | $C_2H_5$ | $C_2H_4OCH_3$ | $CH_3$ | $CH_2$— 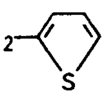 | 622 | 0,39 | 3:2 |
| 14 | $C_2H_5$ | $C_2H_4OCH_3$ | $CH_3$ | 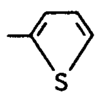 | 635 | 0,44 | 3:2 |
| 15 | $C_2H_5$ | $C_2H_4OCH_3$ | $CH_3$ | $C(CH_3)_3$ | 623 | 0,47 | 3:2 |
| 16 | $C_2H_5$ | $C_2H_4OCH_3$ | $CH_3$ | $C_6H_5$ | 631 | 0,24 | 8:2 |
| 17 | $C_2H_5$ | $C_2H_4OCH_3$ | $CH_3$ | 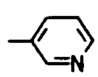 | 634 | 0,14 | 0:1 |
| 18 | $CH(CH_3)_2$ | $C_2H_5$ | H | $CH_2$— 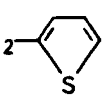 | 633 | 0,54 | 3:2 |
| 19 | $CH(CH_3)_2$ | $C_2H_5$ | H | 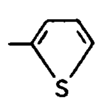 | 639 | 0,38 | 8:2 |

Tabelle 1 - Forts.

| Bsp. Nr. | $Y^1$ | $Y^2$ | $Y^3$ | $Y^4$ | $\lambda_{max}$ (nm) | $R_f$-Wert | T:E |
|---|---|---|---|---|---|---|---|
| 20 | $CH(CH_3)_2$ | $C_2H_5$ | H | $C(CH_3)_3$ | 629 | 0,43 | 8:2 |
| 21 | $CH(CH_3)_2$ | $C_2H_5$ | H | $C_6H_5$ | 636 | 0,56 | 3:2 |
| 22 | $CH(CH_3)_2$ | $C_3H_5$ | H | 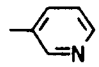 | 638 | 0,24 | 0:1 |
| 23 | $C_2H_5$ | $C_2H_5$ | $NHCO_2CH_3$ | $CH_2$ 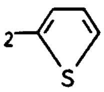 | 641 | 0,48 | 3:2 |
| 24 | $C_2H_5$ | $C_2H_5$ | $NHCO_2CH_3$ | 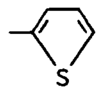 | 650 | 0,60 | 0:1 |
| 25 | $C_2H_5$ | $C_2H_5$ | $NHCO_2CH_3$ | $C(CH_3)_3$ | 642 | 0,44 | 3:2 |
| 26 | $C_2H_5$ | $C_2H_5$ | $NHCO_2CH_3$ | 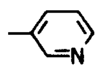 | 650 | 0,10 | 0:1 |
| 27 | $C_2H_5$ | $C_2H_5$ | $NHCO_2CH_3$ | $C_6H_5$ | 647 | 0,51 | 3:2 |
| 28 | $C_2H_5$ | $C_2H_5$ | $NHCOCH_3$ | $CH_2$ 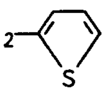 | 646 | 0,39 | 0:1 |
| 29 | $C_2H_5$ | $C_2H_5$ | $NHCOCH_3$ | 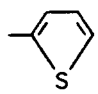 | 655 | 0,38 | 0:1 |
| 30 | $C_2H_5$ | $C_2H_5$ | $NHCOCH_3$ | $C(CH_3)_3$ | 646 | 0,32 | 3:2 |
| 31 | $C_2H_5$ | $C_2H_5$ | $NHCOCH_3$ | $C_6H_5$ | 652 | 0,30 | 3:2 |
| 32 | $C_2H_5$ | $C_2H_5$ | $NHCOCH_3$ | 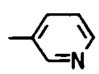 | 654 | | |
| 33 | $C_2H_5$ | $C_2H_5$ | H | $CH_2$ 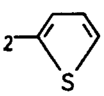 | 619 | 0,34 | 3:2 |
| 34 | $C_2H_5$ | $C_2H_5$ | H | 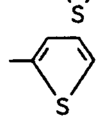 | 627 | 0,33 | 3:2 |
| 35 | $C_2H_5$ | $C_2H_5$ | H | $C(CH_3)_3$ | 619 | 0,39 | 3:2 |
| 36 | $C_2H_5$ | $C_2H_5$ | H | $C_6H_5$ | 624 | 0,42 | 3:2 |
| 37 | $C_2H_5$ | $C_2H_5$ | H | 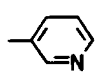 | 626 | 0,15 | 0:1 |

Tabelle 2

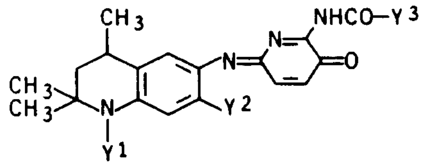

| Bsp. Nr. | Y1 | Y2 | Y3 | λmax (nm) | $R_f$-Wert | T:E |
|---|---|---|---|---|---|---|
| 38 | H | H | $CH_3$ | 619 | 0,38 | 0:1 |
| 39 | $C_2H_5$ | $CH_3$ | $CH_3$ | 645 | 0,22 | 3:2 |
| 40 | $C_2H_4OC_2H_5$ | $CH_3$ | $CH_3$ | 639 | 0,24 | 8:2 |
| 41 | $CH_3$ | $CH_3$ | $CH_3$ | 641 | 0,51 | 0:1 |
| 42 | $C_2H_4CO_2C_2H_5$ | H | 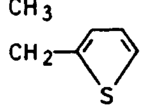 | 627 | 0,36 | 3:3 |
| 43 | $C_2H_4CO_2C_2H_5$ | H | 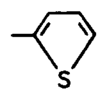 | 633 | 0,58 | 0:1 |
| 44 | $C_2H_4CO_2C_2H_5$ | H | $C(CH_3)_3$ | 625 | 0,43 | 3:2 |
| 45 | $C_2H_4CO_2C_2H_5$ | H | $C_6H_5$ | 632 | 0,35 | 3:2 |
| 46 | $C_2H_4CO_2C_2H_5$ | H | 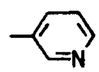 | 634 | 0,20 | 0:1 |
| 47 | $C_2H_5$ | H | 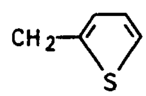 | 638 | 0,42 | 3:2 |
| 48 | $C_2H_5$ | H | 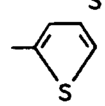 | 647 | 0,45 | 3:2 |
| 49 | $C_2H_5$ | H | $C(CH_3)_3$ | 638 | 0,15 | 8:2 |
| 50 | $C_2H_5$ | H | $C_6H_5$ | 644 | 0,41 | 3:2 |
| 51 | $C_2H_5$ | H | 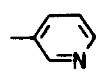 | 646 | 0,14 | 0:1 |
| 52 | $CH_3$ | $CH_3$ | 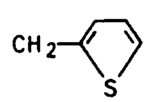 | 647 | 0,60 | 3:2 |
| 53 | $CH_3$ | $CH_3$ | 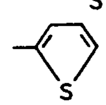 | 653 | 0,60 | 3:2 |
| 54 | $CH_3$ | $CH_3$ | $C(CH_3)_3$ | 644 | 0,65 | 3:2 |
| 55 | $CH_3$ | $CH_3$ | $C_6H_5$ | 651 | 0,33 | 8:2 |
| 56 | $CH_3$ | $CH_3$ | 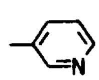 | 654 | 0,13 | 3:2 |

Transfer der Farbstoffe

Um das Transferverhalten der Farbstoffe quantitativ und in einfacher Weise prüfen zu können, wurde der Thermotransfer mit großflächigen Heizbacken anstelle eines Thermokopfes durchgeführt, wobei die

Transfertemperatur im Bereich 70 °C < T < 120 °C variiert und die Transferzeit auf 2 Minuten festgelegt wurde.

α) Allgemeines Rezept für die Beschichtung der Träger mit Farbstoff:

1 g Bindemittel wurde in 8 ml Toluol/Ethanol (8:2 v/v) bei 40 bis 50 °C gelöst. Dazu wurde eine Lösung aus 0,25 g Farbstoff in 5 ml Tetrahydrofuran eingerührt und gegebenenfalls von unlöslichem Rückstand abfiltriert. Die so erhaltene Druckpaste wurde mit einer 80 µm Rakel auf eine Polyesterfolie (Dicke: 6 bis 10 µm) abgezogen und mit einem Fön getrocknet.

β) Prüfung auf thermische Transferierbarkeit

Die verwendeten Farbstoffe wurden in der folgenden Weise geprüft:

Die den zu prüfenden Farbstoff in der Beschichtungsmasse (Vorderseite) enthaltende Polyesterfolie (Geber) wurde mit der Vorderseite auf kommerziell erhältliches (unten näher bezeichnetes) Papier (Nehmer) gelegt und aufgedrückt. Geber/Nehmer wurden dann mit Aluminiumfolie umwickelt und zwischen zwei beheizten Platten bei verschiedener Temperatur T (im Temperaturintervall 70 °C < T < 120 °C) erhitzt. Die in die glänzende Kunststoffschicht des Nehmers diffundierte Farbstoffmenge ist proportional der optischen Dichte (= Extinktion A). Letztere wurde photometrisch bestimmt. Trägt man den Logarithmus der im Temperaturintervall zwischen 80 und 110 °C gemessenen Extinktion A der angefärbten Nehmerpapiere gegen die zugehörige reziproke absolute Temperatur auf, so erhält man Geraden, aus deren Steigung die Aktivierungsenergie $\Delta E_T$ für das Transferexperiment berechnet wird:

$$\Delta E_T = 2,3 \cdot R \cdot \frac{\Delta \log A}{\Delta\left[\frac{1}{T}\right]}$$

Zur vollständigen Charakterisierung wurde aus den Auftragungen zusätzlich die Temperatur T* [°C] entnommen, bei der die Extinktion A der angefärbten Nehmerpapiere den Wert 1 erreicht.

Die in der folgenden Tabelle 3 aufgeführten Farbstoffe wurden nach α) verarbeitet und die erhaltenen, mit Farbstoff beschichteten Träger nach ß) auf das Transferverhalten geprüft. In der Tabelle sind jeweils die Thermotransferparameter T* und $\Delta E_T$ und die verwendeten Bindemittel aufgeführt.

Als Aufnahmemedium (N) diente Hitachi Color Video Print Paper der Sorte VY-S, VY-T und VY-C.

Dabei gelten folgende Abkürzungen:

B = Bindemittel
EC = Ethylcellulose
EHEC = Ethylhydroxyethylcellulose,
V = Vylon®290 (Firma Toyobo)

Tabelle 3

| Beispiel Nr. | Farbstoff Nr. | B | N | T* [°C] | $\Delta E_T$ [kcal/mol] |
|---|---|---|---|---|---|
| 57 | 1 | V | VY-T | 88 | 16 |
| 58 | 1 | V | VY-C | 96 | 13 |
| 59 | 5 | V | VY-T | 84 | 14 |
| 60 | 9 | EC | VY-C | 94 | 14 |
| 61 | 10 | EHEC | VY-T | 87 | 15 |
| 62 | 14 | EC | VY-T | 92 | 17 |
| 63 | 2 | V | VY-T | 90 | 16 |
| 64 | 29 | V | VY-S | 70 | 12 |

Beispiel 65

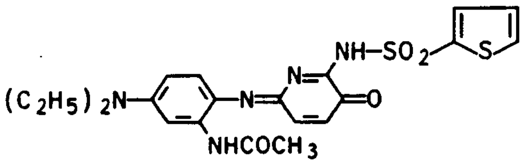

| B | N | $\lambda_{max}$ [nm] (gemessen in Methylenchlorid) | T* [°C] | $\Delta E_T$ [kcal/mol] |
|---|---|---|---|---|
| V | VY-S | 658 | 96 | 10 |

Ebenfalls günstige Ergebnisse werden mit den im folgenden aufgeführten Farbstoffen erhalten.

| Bsp. Nr. | Farbstoff |
|---|---|
| 66 | 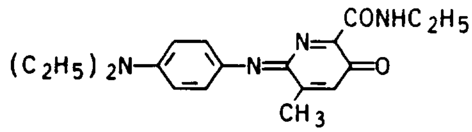 |
| 67 | 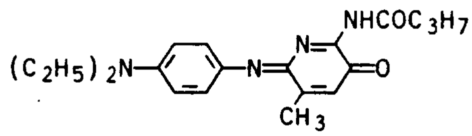 |
| 68 | 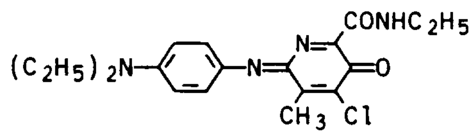 |
| 69 | 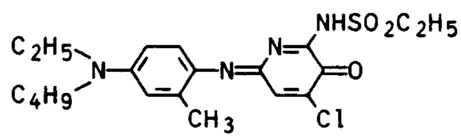 |
| 70 | 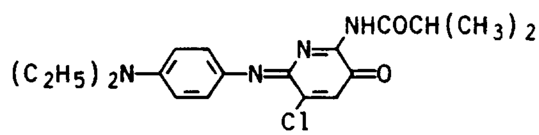 |
| 71 | 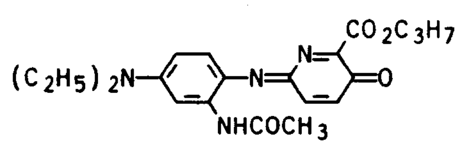 |
| 72 | 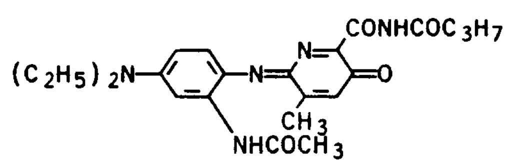 |
| 73 | 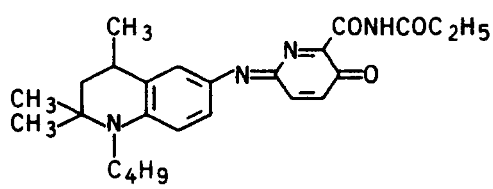 |
| 74 | 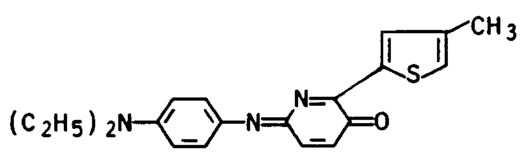 |

75 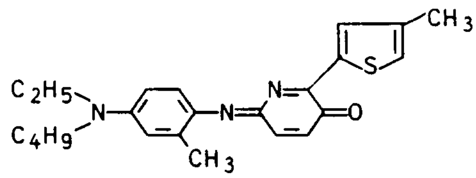

76 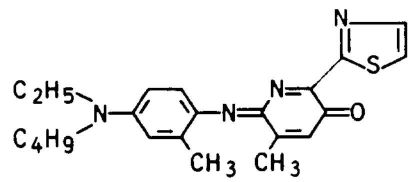

77 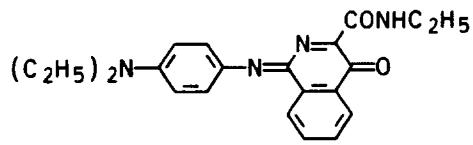

78 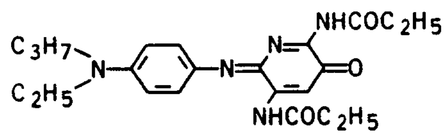

**Patentansprüche**

1. Pyridonfarbstoffe der Formel I

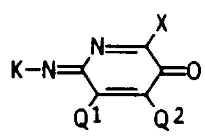 (I),

in der

$Q^1$ Wasserstoff, Fluor, Chlor, Methyl oder einen Rest der Formel $-NH-CO-R^1$, $-NH-CO-OR^1$, $-NH-CO-NR^1R^2$, $NH-CS-OR^1$, $-NH-CS-NR^1R^2$, $-NH-CO-R^3$, $-NH-SO_2-R^1$, $-NH-SO_2-R^3$ oder $-NH-SO_2-NR^1R^2$, worin
$R^1$ und $R^2$ gleich oder verschieden sind und unabhängig voneinander jeweils für $C_1$-$C_8$-Alkyl, das gegebenenfalls substituiert ist und durch ein oder zwei Sauerstoffatome in Etherfunktion unterbrochen sein kann, $C_5$-$C_7$-Cycloalkyl, Phenyl oder Tolyl oder $-NR^1R^2$ auch für Amino und
$R^3$ für einen fünf- oder sechsgliedrigen aromatischen heterocyclischen Rest, der gegebenenfalls benzoanelliert ist und ein oder mehrere Heteroatome, ausgewählt aus der Gruppe, bestehend aus Stickstoff, Sauerstoff und Schwefel, ausweist, stehen,

$Q^2$ Wasserstoff, Fluor oder Chlor oder $Q^1$ und $Q^2$ zusammen mit den Kohlenstoffatomen an die sie geknüpft sind, einen fünf- oder sechsgliedrigen aromatischen carbocyclischen oder heterocyclischen Ring,

X den obengenannten Rest $R^3$ oder einen Rest der Formel $-CO-OR^1$, $-CO-NHR^1$, $-CO-NH-CO-R^1$, $-CO-NH-CO-R^3$, $-CO-NH-SO_2-R^3$, $-NH-CO-R^1$, $-NH-CO-OR^1$, $-NH-CO-NR^1R^2$, $-NH-CS-OR^1$, $-NH-CS-NR^1R^2$, $-NH-CO-R^3$, $-NH-SO_2-R^1$, $-NH-SO_2-R^3$ oder $-NH-SO_2-NR^1R^2$, worin $R^1$, $R^2$ und $R^3$ jeweils die obengenannte Bedeutung besitzen, und

K einen aromatischen carbocyclischen oder heterocyclischen Rest bedeuten.

2. Pyridonfarbstoffe nach Anspruch 1, dadurch gekennzeichnet, daß
K einen Rest der Formel

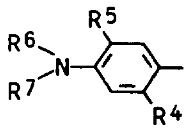 ,
(IIa)

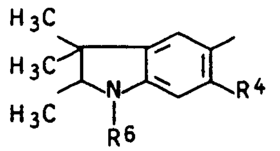 ,
(IIb)

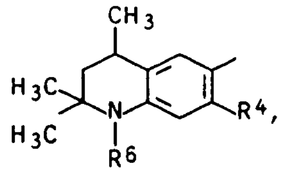 ,
(IIc)

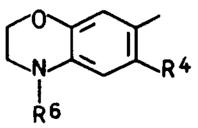 ,
(IId)

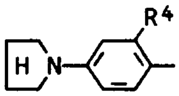 ,
(IIe)

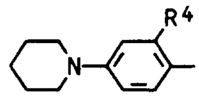 ,
(IIf)

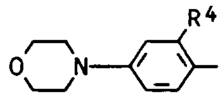
(IIg)

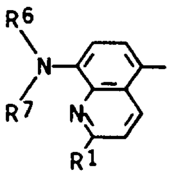 ,
(IIh)

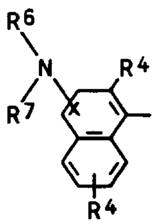 ,
(IIi)

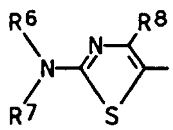 ,
(IIj)

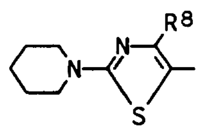
(IIk)

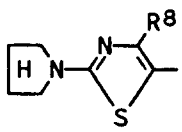
(IIl)

oder

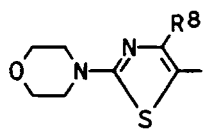
(IIm)

bedeutet, worin

- $R^4$ für Wasserstoff, Methyl, Methoxy, $C_1$-$C_4$-Alkylsulfonylamino, $C_1$-$C_4$-Mono- oder -Dialkylaminosulfonylamino oder den Rest $-NHCOR^9$ oder $-NHCO_2R^9$, wobei $R^9$ die Bedeutung von Phenyl, Benzyl, Tolyl oder $C_1$-$C_8$-Alkyl, das gegebenenfalls durch ein oder zwei Sauerstoffatome in Etherfunktion unterbrochen ist, besitzt,
- $R^5$ für Wasserstoff, Methoxy oder Ethoxy,
- $R^6$ und $R^7$ gleich oder verschieden sind und unabhängig voneinander jeweils für Wasserstoff, $C_1$-$C_8$-Alkyl, das gegebenenfalls substituiert ist und durch ein oder zwei Sauerstoffatome in Etherfunktion unterbrochen sein kann, oder $C_5$-$C_7$-Cycloalkyl und
- $R^8$ für Wasserstoff, Halogen, $C_1$-$C_6$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Thienyl, Hydroxy oder $C_1$-$C_8$-Monoalkylamino stehen und
- $R^1$ die in Anspruch 1 genannte Bedeutung besitzt.

3. Verfahren zur Übertragung von Pyridonfarbstoffen von einem Träger auf ein mit Kunststoff beschichtetes Papier durch Diffusion oder Sublimation mit Hilfe einer Energiequelle, dadurch gekennzeichnet, daß man einen Träger verwendet, auf dem sich ein oder mehrere Farbstoffe der Formel I gemäß Anspruch 1 befinden.

## Claims

1. A pyridone dye of the formula I

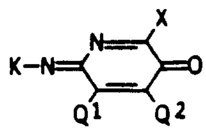

(I)

where

$Q^1$ is hydrogen, fluorine, chlorine, methyl or a radical of the formula -NH-CO-$R^1$, -NH-CO-$OR^1$, -NH-CO-$NR^1R^2$, NH-CS-$OR^1$, -NH-CS-$NR^1R^2$, -NH-CO-$R^3$, -NH-$SO_2$-$R^1$, -NH-$SO_2$-$R^3$ or -NH-$SO_2$-$NR^1R^2$, where

$R^1$ and $R^2$ are identical or different and each is independently of the other $C_1$-$C_8$-alkyl, which may be substituted or unsubstituted and which may be interrupted by one or two oxygen atoms in ether function, $C_5$-$C_7$-cycloalkyl, phenyl or tolyl, or else -$NR^1R^2$ is amino, and

$R^3$ is a five- or six-membered aromatic heterocyclic radical which may be benzofused and contains one or more hetero atoms selected from the group consisting of nitrogen, oxygen and sulfur,

$Q^2$ is hydrogen, fluorine or chlorine or $Q^1$ and $Q^2$ together with the carbon atoms to which they are attached form a five- or six-membered aromatic carbocyclic or heterocyclic ring,

X is the abovementioned radical $R^3$ or a radical of the formula -CO-$OR^1$, -CO-$NHR^1$, -CO-NH-CO-$R^1$, -CO-NH-CO-$R^3$, -CO-NH-$SO_2$-$R^3$, -NH-CO-$R^1$, -NH-CO-$OR^1$, -NH-CO-$NR^1R^2$, -NH-CS-$OR^1$, -NH-CS-$NR^1R^2$, -NH-CO-$R^3$, -NH-$SO_2$-$R^1$, -NH-$SO_2$-$R^3$ or -NH-$SO_2$-$NR^1R^2$, where $R^1$, $R^2$ and $R^3$ are each as defined above, and

K is an aromatic carbocyclic or heterocyclic radical.

2. A pyridone dye as claimed in claim 1, wherein

K is a radical of the formula

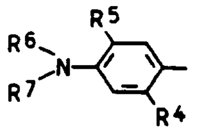

(IIa),

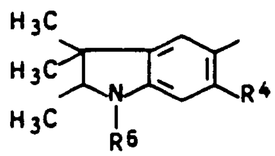

(IIb),

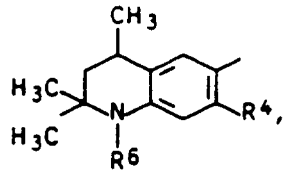

(IIc),

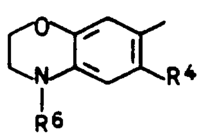

(IId),

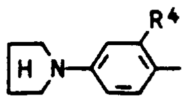

(IIe),

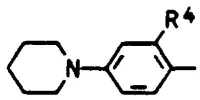

(IIf),

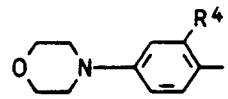

(IIg)

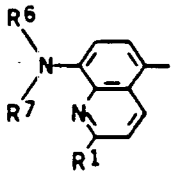

(IIh),

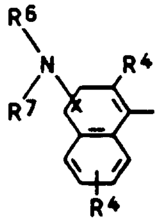

(IIi),

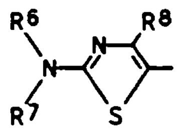

(IIj),

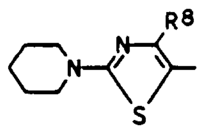

(IIk)

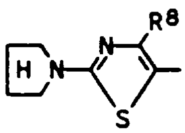

(IIl)

or

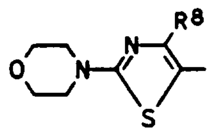

(IIm)

where

- $R^4$ is hydrogen, methyl, methoxy, $C_1$-$C_4$-alkylsulfonylamino, $C_1$-$C_4$-mono- or -dialkylaminosulfonylamino or the radical -$NHCOR^9$ or -$NHCO_2R^9$, where $R^9$ is phenyl, benzyl, tolyl or $C_1$-$C_8$-alkyl which may be interrupted by one or two oxygen atoms in ether function,
- $R^5$ is hydrogen, methoxy or ethoxy,
- $R^6$ and $R^7$ are identical or different and each is independently of the other hydrogen, $C_1$-$C_8$-alkyl, which may be substituted or unsubstituted and which may be interrupted by one or two oxygen atoms in ether function, or $C_5$-$C_7$-cycloalkyl,
- $R^8$ is hydrogen, halogen, $C_1$-$C_6$-alkyl, unsubstituted or $C_1$-$C_4$-alkyl- or $C_1$-$C_4$-alkoxy-substituted phenyl, unsubstituted or $C_1$-$C_4$-alkyl- or $C_1$-$C_4$-alkoxy-substituted benzyl, cyclohexyl, thienyl, hydroxyl or $C_1$-$C_8$-monoalkylamino, and
- $R^1$ is as defined in claim 1.

**3.** A process for transferring pyridone dyes from a transfer to a sheet of plastic-coated paper by diffusion or sublimation with the aid of an energy source, which comprises using a transfer on which there is or are one or more dyes of the formula I as set forth in claim 1.

## Revendications

**1.** Colorants du groupe des pyridones de formule I

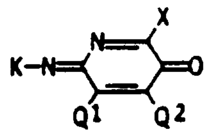

(I),

dans laquelle

- $Q^1$ représente un atome d'hydrogène, de fluor, de chlore, un reste méthyle ou un reste de formule -NH-CO-$R^1$, -NH-CO-O$R^1$, -NH-CO-N$R^1R^2$, NH-CS-O$R^1$, -NH-CS-N$R^1R^2$, -NH-CO-$R^3$, -NH-$SO_2$-$R^1$, -NH-$SO_2$-$R^3$ ou -NH-$SO_2$-N$R^1R^2$, où
  $R^1$ et $R^2$ sont identiques ou différents et sont mis chacun, indépendamment l'un de l'autre, pour un reste alkyle en $C_1$-$C_8$ qui est éventuellement substitué et peut être interrompu par un ou deux atomes d'oxygène en fonction éther, cycloalkyle en $C_5$-$C_7$, phényle ou tolyle, -N$R^1R^2$ pouvant aussi être mis pour un reste amino, et
  $R^3$ est mis pour un reste hétérocyclique aromatique a cinq ou six chaînons, qui est éventuellement benzocondensé et qui comporte éventuellement un ou plusieurs hétéroatomes choisis dans le groupe constitué par des atomes d'azote, d'oxygène et de soufre.
- $Q^2$ représente un atome d'hydrogène, de fluor ou de chlore, ou $Q^1$ et $Q^2$ représentent ensemble, avec les atomes de carbone auxquels ils sont reliés, un noyau carbocyclique on hétérocyclique aromatique à cinq ou six chaînons,
- X représente le reste $R^3$ défini ci-dessus ou un reste de formule -CO-O$R^1$, -CO-NH$R^1$, -CO-NH-CO-$R^1$, -CO-NH-CO-$R^3$, -CO-NH-$SO_2$-$R^3$, -NH-CO-$R^1$, -NH-CO-O$R^1$, -NH-CO-N$R^1R^2$, -NH-CS-O$R^1$, -NH-CS-N$R^1R^2$, -NH-CO-$R^3$, -NH-$SO_2$-$R^1$, -NH-$SO_2$-$R^3$ ou -NH-$SO_2$-N$R^1R^2$, où $R^1$, $R^2$ et $R^3$ ont chacun la signification donnée ci-dessus, et
- K représente un reste aromatique carbocyclique ou hétérocyclique.

**2.** Colorants du groupe des pyridones selon la revendication 1, caractérisés en ce que
K représente un reste de formule

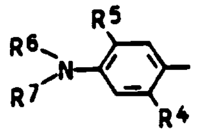 ,
(IIa)

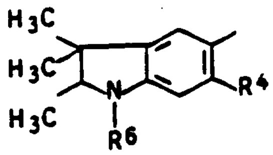 ,
(IIb)

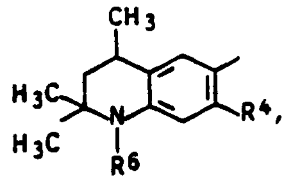
(IIc)

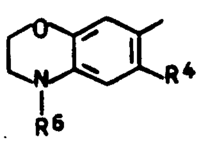 ,
(IId)

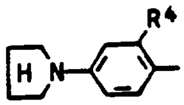 ,
(IIe)

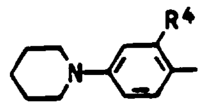 ,
(IIf)

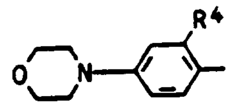
(IIg)

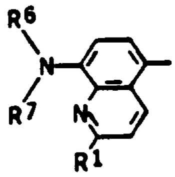 ,
(IIh)

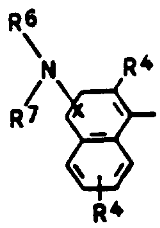 ,
(IIi)

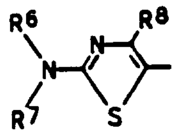 ,
(IIj)

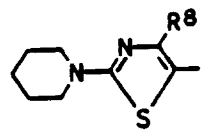
(IIk)

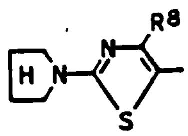
(IIl)

ou

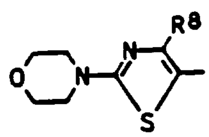
(IIm)

dans laquelle

$R^4$ est mis pour un atome d'hydrogène, pour un groupement méthyle, méthoxy, (alkyl en $C_1$-$C_4$)sulfonylamino, mono- ou di(alkyl en $C_1$-$C_4$)aminosulfonylamino ou pour le reste -NHCOR$^9$ ou -NHCO$_2$R$^9$, $R^9$ représentant un reste phényle, benzyle, tolyle ou alkyle en $C_1$-$C_8$ qui est éventuellement interrompu par un ou deux atomes d'oxygène en fonction éther,

$R^5$ est mis pour un atome d'hydrogène ou pour un groupement méthoxy ou éthoxy,

$R^6$ et $R^7$ sont identiques ou différents et sont mis chacun, indépendamment l'un de l'autre, pour un atome d'hydrogène, pour un reste alkyle en $C_1$-$C_8$ qui est éventuellement substitué et peut être interrompu par un ou deux atomes d'oxygène en fonction éther ou pour un reste cycloalkyle en $C_5$-$C_7$,

$R^8$ est mis pour un atome d'hydrogène ou d'halogène ou pour un reste alkyle en $C_1$-$C_6$, phényle éventuellement substitué par un groupement alkyle en $C_1$-$C_4$ ou alcoxy en $C_1$-$C_4$, benzyle eventuellement substitué par un groupement alkyle en $C_1$-$C_4$ ou alcoxy en $C_1$-$C_4$, cyclohexyle, thiényle, hydroxy ou mono(alkyl en $C_1$-$C_8$)amino, et

$R^1$ a la signification donnée dans la revendication 1.

**3.** Procédé de transfert de colorants du groupe des pyridones entre un support et un papier enduit de matière plastique, par diffusion ou sublimation à l'aide d'une source d'énergie, caractérisé en ce que l'on utilise un support sur lequel se trouvent un ou plusieurs colorants de formule I selon la revendication 1.